# EUROPEAN PATENT APPLICATION

(11) **EP 0 804 014 A1**
(43) Date of publication of application: **29.10.1997**
(21) Application number: 97106910.9
(22) Date of filing: 25.04.1997
(51) Int. Cl.: H04N 1/04, H04N 1/407, H04N 1/40

(54) **Variable resolution laser printer**

(30) Priority: 26.04.1996 JP 107496/96
(71) Applicant: KONICA CORPORATION, Tokyo (JP)
(72) Inventor: Yoshino, Kunihisa, Hachioji-shi, Tokyo (JP); Yokobori, Jun, Hachioji-shi, Tokyo (JP); Toura, Kosuke, Hachioji-shi, Tokyo (JP); Niitsuma, Tetsuya, Hachioji-shi, Tokyo (JP); Matsubara, Akitoshi, Hachioji-shi, Tokyo (JP)
(74) Representative: Henkel, Feiler, Hänzel & Partner

(57) **Abstract**

An image forming apparatus includes: a photoreceptor; writing exposure device for forming a latent image on the photoreceptor; developing device for developing the latent image to form a toner image; transfer device for transferring the toner image onto a recording sheet; fixing device for fixing the toner image on the recording sheet; switching device for switching a plurality of recording pixel densities; and correcting device for correcting a maximum image density and gradation of the toner image according to the switched recording pixel density.

For the maximum image density correction, a test patch image is formed on the photoreceptor drum.

The density is detected with a density detecting sensor.

Gradation correction data is generated and interpolated to represent a continuous curve.

## Description

### BACKGROUND OF THE INVENTION

The present invention relates to an image forming apparatus such as a copying machine or a printer provided with a writing section by means of an optical laser beam scanning system, an image forming method using the image forming apparatus and a control method of the image forming apparatus.

In an image forming apparatus provided with a writing section by means of an optical laser beam scanning system, an image from an electrostatic latent image formed on a photoreceptor is formed by means of synthesizing of primary scanning using a laser beam and secondary scanning followed by movement of the photoreceptor.

By reducing the speed of the above-mentioned secondary scanning, i.e., by reducing the rotation speed of the photoreceptor when it is drum-shaped, and thereby reducing the linear speed of a polygonal mirror and a galvano mirror, the above-mentioned electrostatic latent image increases the density of recording pixel density for recording and results in a high quality image.

In order to obtain a high quality image due to switching the above-mentioned recording pixel density, power of a laser beam which conducts writing can be decreased for recording.

Namely, by reducing the power of the laser beam, the diameter of the beam spot can be substantially reduced. Therefore, recording at further high density becomes possible.

However, laser elements have different emission properties due to the dispersion between elements. Therefore, when a recording pixel density is switched, the maximum image density and the gradation characteristics are also changed so that a high quality image cannot be provided.

Conventionally, gradation characteristics correction has been conducted at a regular recording pixel density of 400 dpi since control becomes complicated. At a high quality recording pixel density of 600 dpi, identical gradation characteristics correction with 400 dpi is applied. At each recording pixel density, different gradation characteristics correction was not conducted.

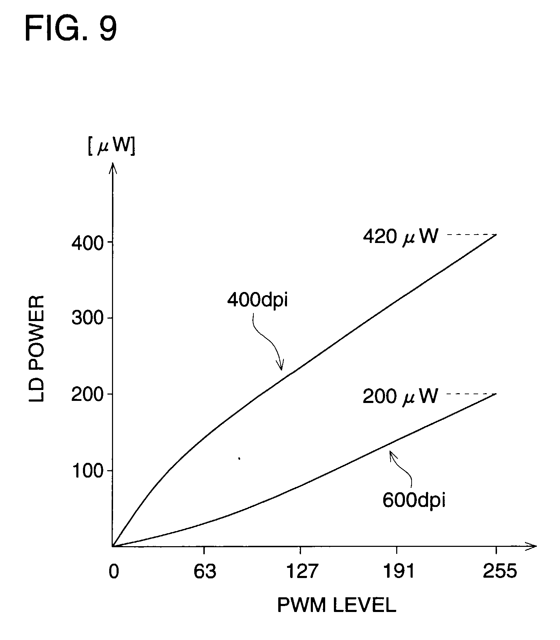

For example, as shown in Fig. 9, when the characteristics (at a maximum LD power of 420 µW) of the relationship between the PWM level and the LD power at 400 dpi exist, by parting a part of characteristics of 400 dpi (up to 200 µW) to PWM level 0 to 255, the characteristics of 600 dpi were formed.

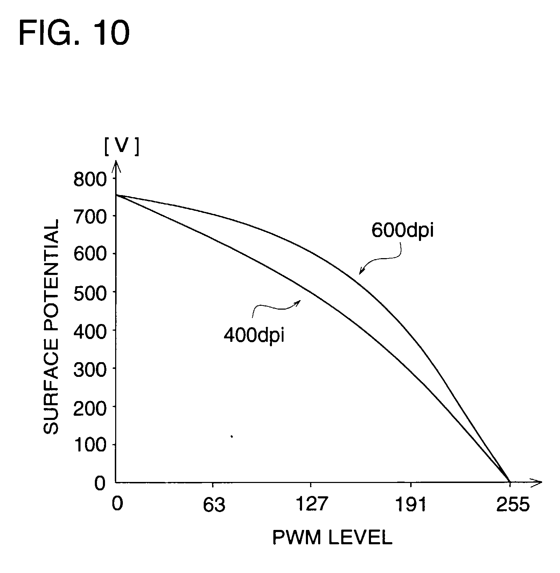

Fig. 10 shows the behavior of the surface potential on the surface of the photoreceptor drum when the above-mentioned characteristics were used. Here, the initial value was - 750 V. The absolute value of the above-mentioned potential was reduced due to irradiation by LD. This, therefore, means that toner is adhered corresponding to the amount of the reduction of the absolute value of electrical potential.

As is apparent from Fig. 10, using the gradation as shown in Fig. 9, their surface potential are different in spite of the same PWM level. Namely, though the image signal has the same level, by modifying the recording pixel density, the density of actually formed image becomes different. As a result, fine gradation property and the maximum image density cannot be reproduced faithfully.

However, customer requests for increasing image quality has been strong. Fine gradation property and the maximum image density have become essential. Specifically, in reproduction of photographic images, the above-mentioned fine reproduction is demanded.

The present invention was attained considering the above-mentioned issues. Its object is to form an image excellent in terms of reproducibility though recording pixel density is switched.

The present inventors studied extensively, and discovered that the cause of the malfunction of the density of gradation reproducibility is the differences of emission properties of the laser element itself when laser power is changed.

Therefore, the present inventors discovered that enhancement higher quality can be attained by adding correction of the maximum image density and gradation characteristics so as to correspond to the differences of emission characteristics.

When the gradation characteristics or the maximum image density is corrected at each recording pixel density, problems occur which require a long time for the correction process since it is necessary to conduct correction by forming a testing image at each recording pixel density.

Another object is to shorten the time necessary for correction when the recording pixel density is switched. Practically, by utilizing a table for correction using another recording pixel density, shortened time of the correction process when switching can be attained.

### SUMMARY OF THE INVENTION

A structure for attaining the above object is an image forming apparatus provided with a photoreceptor; writing exposure device for forming a latent image on the photoreceptor; developing device for developing the latent image to form a toner image; transfer device for transferring the toner image onto a recording sheet; fixing device for fixing the toner image on the recording sheet; switching device for switching a plurality of recording pixel densities; and correcting device for correcting a maximum image density of the toner image according to the switched recording pixel density.

### BRIEF DESCRIPTION OF THE DRAWINGS

Fig. 1 is a block diagram showing an electrical constitution of an image forming apparatus used in an Example of the present invention for each functional block.

Fig. 2 is a cross sectional view showing a mechanical cross sectional structure of an image forming apparatus used in an Example of the present invention.

Fig. 3 is a plan view showing a constitution of a writing section used in an Example of the present invention.

Fig. 4 is a characteristics view showing an example of an image forming condition followed by switching of pixel density in an Example of the present invention.

Fig. 5 is a flow chart showing a processing procedure in rising followed by switch of recording pixel density in an Example of the present invention.

Fig. 6 is a flow chart showing the main portion of a processing procedure in rising followed by switch of recording pixel density in an Example of the present invention.

Fig. 7 is a characteristics drawing showing the relationship between the PWM level and copy density at plural recording pixel densities.

Fig. 8 is a characteristics drawing showing the relationship between the number of rotations of sleeve and the peripheral speed ratio at plural recording pixel densities.

Fig. 9 is a characteristics drawing showing the relationship between the PWM level and the LD power at plural recording pixel densities.

Fig. 10 is a characteristics drawing showing the relationship between the PWM level and the surface potential on the photoreceptor drum at plural recording pixel densities.

### DETAILED DESCRIPTION OF THE PREFERRED EMBODIMENT

An image forming apparatus, an image forming method and a control method of an image forming apparatus, as examples of the present invention, will be explained referring to drawings.

### 〈Mechanical structure of the image forming apparatus〉

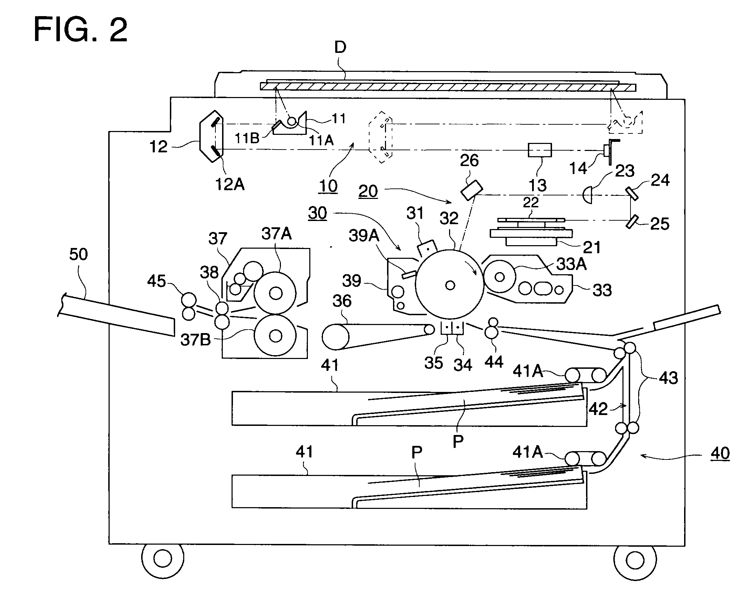

Here, referring to Fig. 2, the entire mechanical constitution of the image forming apparatus used in the example of the present invention will be explained.

Fig. 2 represents a cross sectional view of an image forming apparatus of the present invention, and composed of image reading section 10, laser writing section 20, image forming section 30 and paper feeding section 40.

An image on document D loaded on a document platen is exposed and scanned by means of a parallel movement from a position shown with solid lines to a position shown with broken lines of first mirror unit 11 provided with illumination lamp 11A and mirror 11B in image reading section 10 and following movement at one-half speed of the 1st mirror unit of second mirror unit 12 provided with facing paired mirrors 12A. The image obtained through exposure and scanning is image-formed on image pick-up element 14 through projection lens 13, and is temporarily stored in the memory as an image signal through image processing.

Next, when the above-mentioned image signal is read from the memory to be inputted to laser writing section 20, laser beam generated by a semiconductor laser is rotated and scanned by means of polygonal mirror 22 which is rotated by driving motor 21.

The projected laser beam is reflected and scans due to rotation of polygonal mirror 22, and then scans to expose the photosensitive surface of photoreceptor drum 32 in which charge is provided by means of chargers 31 through fθ lens and a cylindrical lens.

Due to the scanning exposure, an electrostatic latent image of the document is formed on the photosensitive surface of photoreceptor drum 32. Accordingly, due to primary scanning by means of the laser beam and secondary scanning following rotation of photoreceptor drum 32, an electrostatic latent image of the document is progressively formed on the circumference of photoreceptor drum 32. The electrostatic latent image is reverse-developed to form a toner image by means of a developer carried by development sleeve 33A in developing device 33.

From each paper feeding cassette 41 loaded on paper feeding section 40, recording paper P having a designated size is conveyed out due to operation of conveyance roller 41A housed in paper feeding cassette 41, and fed to the image transfer section through conveyance roller 43.

Recording paper is fed to the transfer section synchronously with the toner image on the circumference of the above-mentioned photoreceptor drum 32 by means of registration roller 44.

Next, recording paper P is separated from the circumference of photoreceptor drum 32 due to the discharging effect of separation device 35, and it is conveyed to fixing device 37 through conveyance belt 36. After toner is melted due to heat and pressure caused by interposing the recording medium between upper roller 37A and lower roller 37B. Following this, the recording medium is ejected by fixing device 37 through conveyance rollers 38.

In the above-mentioned fixing device 37, consisting of upper roller 37A and lower roller 37B, upper roller 37A serves as heating roller. As a parting agent, a silicone oil is uniformly coated on the circumference of upper roller 37A, which prevents the occurrence of off-set phenomenon, i.e., fused toner on recording medium P transferred onto the circumference of upper roller 37A.

The temperature of the upper roller 37A and the lower roller 37B has been detected by means of temperature sensor 37S (not illustrated). By means of temperature control described later, a prescribed temperature set is maintained.

Recording paper P ejected from fixing device 37 is discharged onto tray 50 through paper ejecting rollers 45.

On the other hand, from photoreceptor drum 32 from which recording paper P is separated, residual toner is removed by a pressure of blade 39A of cleaning device 39 and photoreceptor drum 32 is thereby cleaned. Next, the photoreceptor drum 32 is provided with charge and enters into the next image forming process.

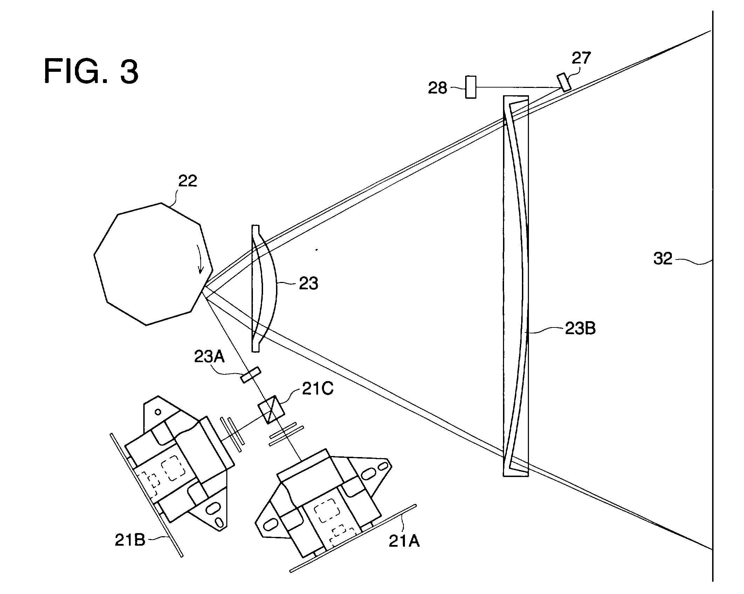

Fig. 3 is a plan view showing laser writing section 20 which is an optical laser scanning system of an apparatus in Fig. 2. Reflecting mirrors 24, 25 and 26 have been omitted in this view.

In Fig. 3, numerals 21A and 21B represent a laser unit integrally composed of a semiconductor laser which is turned ON and OFF corresponding to an image signal and a collimator lens which converts laser beams A and B emitted from a semiconductor laser into parallel beams.

Numeral 21C represents a translucent synthetic prism which emits two laser beams A and B which are incident in perpendicular to each other, in the same direction. Numeral 23 represents a fθ lens. Numerals 23A and 23B represent a cylindrical lens provided to compensate for tilt errors.

Numeral 27 represents a mirror which reflects laser beam onto index sensor 28. Index sensor 28 detects passage of the laser beam, and generates a start signal for writing an image so that the start timing of driving by means of image signals of laser units 21A and 21B is controlled to secure the writing position of the image on photoreceptor drum 32.

Two beams A and B emitted from respective laser units 21A and 21B are reflected by polygonal mirror 22 so as to scan and expose photoreceptor drum 32 through cylindrical lens 23A and 23B and reflection mirrors 24 through 26.

In this occasion, the above-mentioned laser beams A and B form images in the shape of elliptical spots being close to each other in a secondary scanning direction by means of fθ lens 23, and two beams write simultaneously two scanning lines on photoreceptor drum 32.

Due to this, an image signal on every other scanning line is inputted simultaneously on laser units 21A and 21B so that two scanning lines are drawn at once. Therefore, an image can be recorded at double recording speed compared with an apparatus using one laser unit.

### 〈Electrical constitution〉

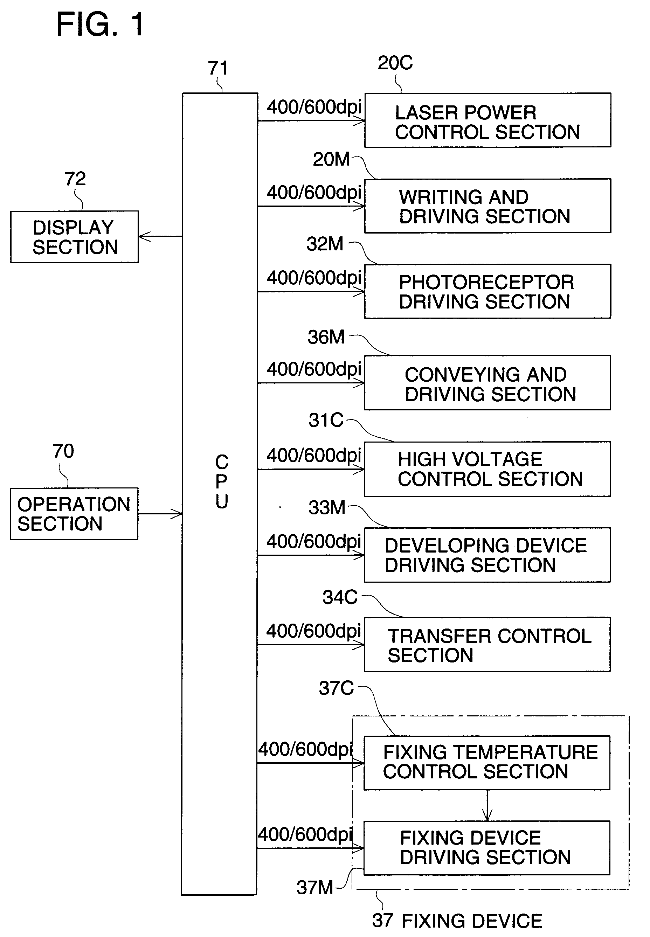

An image forming apparatus constituted as above has an electrical constitution shown in Fig. 1.

Namely, the apparatus is composed of operation section 70 on which various operations, instruction and selection are conducted, CPU 71 which controls entire image forming apparatus after receiving instruction from operation section 70 and displaying section 72 which displays information about operation of the image forming apparatus.

In this operation section 70, a recording pixel density selection button is provided. Every time this is pressed, the recording pixel density is switched from the first mode (=400 dpi) to the second mode (=600 dpi) and returns to the first mode (=400 dpi) so that desired recording pixel density can be selected.

Incidentally, in this case there are two modes discussed to simplify the explanation. The first mode is a mode ordinarily used and the mode set during rising. The second mode is a high quality image mode, and the mode selected by means of switching the recording pixel density.

CPU 71 controls the following sections: writing and driving section 20M which drives the above-mentioned laser writing section; laser power control section 20C which controls the semiconductor laser in the above-mentioned laser writing section 20, photoreceptor driving section 32M which controls the photoreceptor 32, conveyance driving section 36M which drives the above-mentioned conveyance belt, charge control section 31C which drives the charger 31, developing device driving section 33M which drives the above-mentioned developing device 33 and transfer control section 34C which controls the above-mentioned transfer control section 34.

In fixing device 37, there are provided fixing temperature control section 37C which controls the fixing temperature, and fixing device driving section 37M which conducts driving of upper roller 37A and lower roller 37B. Similarly, fixing device 37 is controlled by CPU 71.

Fixing temperature control section 37C is controlled by CPU 71 and fixing device driving section 37M is driven by instruction from CPU 71 and fixing temperature control section 37C.

### 〈Pixel density switching operation〉

CPU 71 provides for switching of pixel density between 400 dpi and 600 dpi by signals to units in each section based on signals from operation section 70, equipped with the above-mentioned selection means.

Namely, photoreceptor drum driving section 32M which receives a switching signal from CPU 71 reduces rotation rate of photoreceptor drum 32. Writing and driving section 20M which receives a switching signal from CPU 71 reduces the linear speed of polygonal mirror 22. In addition, by adaptively correcting an image formation conditions of image formation members related to the linear speed, pixel density switching operation is realized.

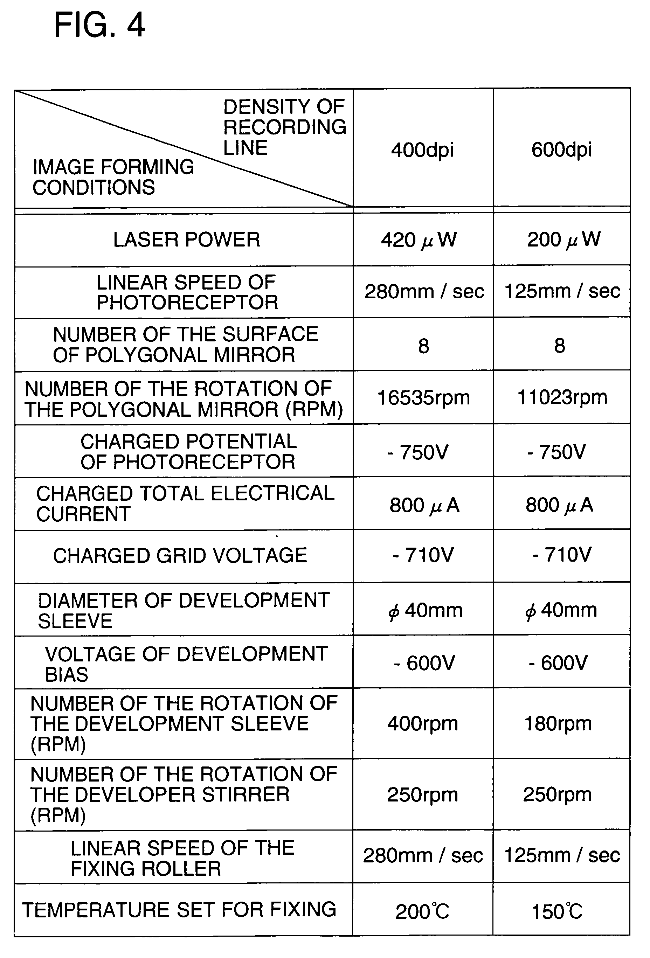

When the recording pixel density is set to the ordinary 400 dpi, the driving speed of photoreceptor drum 32 and related image formation conditions are set to each characteristic value shown in the columns of 400 dpi in Fig. 4.

When the ordinary 400 dpi is replaced with the higher quality 600 dpi, driving speed of photoreceptor drum 32 and related image forming conditions are changed to the characteristic values shown in the columns of 600 dpi in Fig. 4.

When the recording pixel density is switched, as shown in Fig. 4, due to a 400/600 dpi switching signal from CPU 71, driving of photoreceptor drum 32, rotation driving of polygonal mirror 22, driving of developing device 33, conveyance speed of recording paper P, driving of fixing device 37 and voltage of high voltage power supply are concurrently switched to the values shown in Fig. 4.

As one example, when the recording pixel density is in the first mode of 400 dpi, the linear speed of the upper roller 37A and that of photoreceptor drum 32 are both 280 mm/sec., and when the recording pixel density is switched to the second mode of 600 dpi, the linear speed of upper roller 37A is reduced to 125 mm/sec. in accordance with the linear speed of photoreceptor drum 32.

In the present invention, for example, by switching the recording pixel density from the first mode of 400 dpi to the second mode of 600 dpi, as shown in a column of "600 dpi", the linear speed of photoreceptor drum 32 is reduced from 280 mm/sec. to 125 mm/sec. The number of rotations of polygonal mirror is reduced from 16535 rpm to 11023 rpm, and the number of rotations of development sleeve 33A is reduced from 400 rpm to 180 rpm. Further, in correspondence with them, conveyance speed of recording paper P and driving speed of fixing device 37 are synchronously reduced.

Accordingly, operation section 70 and CPU 71 constitute a recording pixel density switching means which switches recording pixel density. In addition, CPU 71 constitutes a switching control means which controls image forming conditions and correction means which corrects the maximum image density and gradation characteristics.

### 〈Processing procedure in rising operation〉

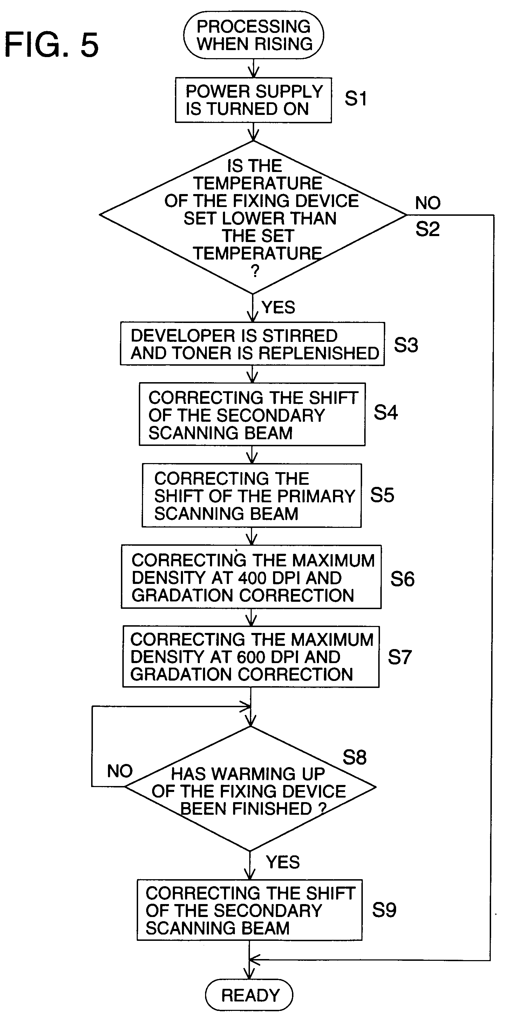

Here, referring to Fig. 5, processing procedure of an image forming apparatus capable of switching recording pixel density in rising operation will be detailed.

In an image forming apparatus of the present invention, when power supply is turned on at the start of copying, each operation is conducted, in parallel with heating of fixing device 37, in accordance with processing flow of rising shown in Fig. 5. Hereinafter, each operation will be explained following the flow chart in Fig. 5.

### [1] Power supply turning on (S1)

The image forming apparatus constantly detects activation of a power supply switch provided on operation section. At a time when the power supply is turned ON, the step advances to the following process.

### [2] Temperature of the fixing device is detected (S2):

When power supply is turned on, CPU 71 measures the temperature of the fixing device detected by temperature sensor 37S at fixing device 37. If the temperature measured is lower than pre-set temperature the operation advances to S4 and subsequent stages.

Here, temperature is pre-set to 50°C which is slightly higher than room temperature, and the temperature of the fixing device is lower than the above-mentioned pre-set temperature, it means that considerable time has passed after the previous printing operation. That means that considerable time is necessary to completely warm up the fixing device.

Therefore, in the present invention, when the temperature of the fixing device is lower than the above-mentioned pre-set temperature, the following correction is conducted in accordance with a pre-set program utilizing the rising time until the warming up is completed, so that favorable quality images can be obtained from the initiation of printing.

On the other hand, that the temperature of fixing device is higher than the pre-set temperature when the power supply is turned on, it means that no noticeable time has passed since the previous printing operation, and that indicates that warming up can be completed within a relatively short time.

Accordingly, if the temperature of the fixing device surpasses the pre-set temperature, another control is conducted while a part of or all of corrections S4 through S9 are omitted. When the fixing device is completely warmed up, it enters the "Ready" status in which copy operations can be started at any time.

### [3] Developer stirring and toner replenishing operation (S3):

When inoperative time is long, electric charging amount to toner in the developer is reduced. Therefore, in order to maintain the electric charging amount of the developer at a prescribed value, an operation for charge stability is conducted in which the stirrer screw inside developing device 33 is rotated according to a control program in CPU 71.

Following the stirring, electric charge amount of developer is restored to almost the initial electric charge amount. Programmed stirring time, which restores to development preparation status, is about 4 minutes. At the 3-minute point of stirring of the developer, toner density is controlled for about 1 minute, and as necessary, toner replenishment is also conducted.

The above-mentioned toner density control is conducted in accordance with a toner density control program stored in CPU 71. Toner density control of the developer is detected by magnetic permeability sensor TS housed inside developing device 33. By comparing the detected value with the reference value and by driving toner replenishing unit (not illustrated), toner density of the developer is almost constantly controlled. Incidentally, the above-mentioned toner density is also controlled during copying cycle.

Though not illustrated in a flow chart in Fig. 5, prior to or after developer stirring and toner replenishment, initial settings of processing data in accordance with temperature and humidity and number of copies as explained below, regulation of laser power and preparation of the status of photoreceptor drum may be conducted.

In CPU 71, ROM in which a program which executes electrostatic photographic process and functions which process in accordance with each instruction signal from operation section 70 are provided. To CPU 71, paper ejection sensor which detects ejection of recording paper P (not illustrated), temperature sensor for detecting temperature inside the apparatus and humidity sensor (not illustrated) for detecting humidity inside the apparatus.

The number of copying sheets detected by paper ejection sensor 94 is inputted to CPU 71, where it is calculated, and the total number of copies is stored in either a register of CPU 71 or the RAM. When power supply for copy start is turned on, ambient temperature and humidity are read by the above-mentioned temperature sensor and humidity sensor in accordance with the program in parallel to warming up of fixing device 37, and are inputted in CPU 71.

In the ROM which was connected to the CPU 71, processing conditions considered to be optimal regarding temperature, humidity and copy number due to theory studied in advance, have been stored as a table. Here, as processing conditions, are transfer electrical current in transfer device 34 which is influenced by temperature, humidity or number of copies, control level of magnetic permeability sensor which detects the toner density of developer and laser power.

The CPU 71 calls the control level of transfer current and magnetic permeability sensor as processing condition corresponding to temperature, humidity and number of copies inputted and sends them to the RAM. Processing conditions sent to the RAM are conditions set when printing.

Laser power is adjusted by a laser power adjustment program stored in the ROM of the CPU 71. "Laser power adjustment" referred to here implies APC (Auto Power Control), in which a semiconductor laser of writing unit 20 is, in an instant, emitted, and the above-mentioned emission is directly received to check whether a prescribed light amount is obtained to be adjusted.

Namely, by comparing voltage value supplied to writing unit 20 corresponding to a prescribed optical amount with outputting voltage value when receiving beams, laser power is adjusted. The adjusted laser power is set in the RAM.

"Preparation status of photoreceptor drum 32" implies to uniformly charge at a stipulated potential (for example, -750 V), and to avoid charging unevenness by charging at least twice by charger 31 onto photoreceptor drum 32, which is an image carrier, in accordance with a program from the ROM under control by the CPU 71. Due to this, an image forming area is subjected to a uniformly stipulated potential.

### [4][5] Correction of scanning beam difference (S4) and (S5):

Correction of the difference of secondary scanning beam (S4) and the correction of the difference of primary scanning beam (S5) are conducted one after another. Therefore, with regard to laser writing section 20, its constitution, detection of beam differences and correction of the beam differences will be explained collectively.

The above-mentioned laser beam differences are corrected using a laser beam difference correction program stored in the ROM of CPU 71. Namely, due to the detection timing interval obtained by input of rising or falling of the beam detection signal from sensors A through D provided in index sensor 28, the calculation of difference amount in the secondary scanning direction and the primary scanning direction is conducted.

Based on the amount of difference calculated as above, beam difference is corrected. Here, with regard to the secondary scanning direction, an adjustment prism is driven and adjusted by means of a stepping motor, and beam difference in the secondary scanning direction is corrected in such a manner that two scanning lines are simultaneously recorded on photoreceptor drum 32.

With regard to the primary scanning direction, beam difference in the primary scanning direction is corrected by adjusting the occurrence of horizontal synchronous signal corresponding to one laser beam, based on the occurrence of the horizontal synchronous signal corresponding to the other laser beam.

### [6] Maximum density correction for 400 dpi and gradation characteristics correction (S6):

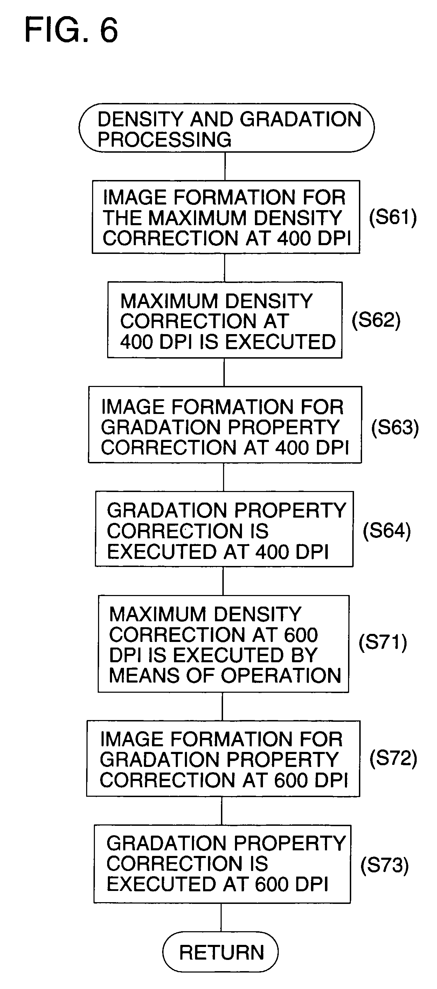

After two laser beam differences are corrected, using at least one kind of two laser beams, correction for image formation is conducted. Density adjustment and gradation characteristics correction shown in Fig. 5 will be explained referring to a flow chart in Fig. 6.

In an embodiment of the present invention, a test patch is written (see S61 in Fig. 6) by a laser beam in which difference has been corrected so that the maximum density at 400 dpi is corrected (see S62 in Fig. 6). In addition, the test patch is written (see S63 in Fig. 6) by a laser beam in which difference has been corrected so that the gradation characteristics correction at 400 dpi is corrected (see S64 in Fig. 6).

### (1) Maximum density correction at 400 dpi (see S6 in Fig. 5 and S61 and S62 in Fig. 6)

For maximum density correction, a test patch image for the maximum density control is formed by a laser beam for which difference has been corrected (see S61 in Fig. 6). Density of the test patch image for the maximum density control is detected.

When there is no toner on photoreceptor drum 32, photoreceptor drum 32 is charged under the control of the CPU 71 similarly to the above-mentioned image formation. Due to a test pattern signal of a patch image for the maximum density control, being sent from the image signal processing section 60, plural latent images of the test patch for the maximum density control are written in the secondary scanning direction on photoreceptor drum 32.

In this occasion, exposure level is constant. For example, in the case of a digital signal of 8 bits in terms of pulse width modulation (PWM), exposure is conducted at level 255 which corresponds to solid black. The CPU 71 drives developing device 33 at a position where it is synchronized with the above-mentioned latent image after detecting the phase of photoreceptor drum 32 by means of a phase signal from the above-mentioned encoder to develop on a reversal development basis.

The number of rotations of development sleeve 33A of developing device 33 during the development is changed at each latent image position of the test patch under control by the CPU 71 in development driving section 33M which drives development sleeve 33A to develops the latent image, and the latent images are developed thereby forming plural test patch images for each of which the density is different.

The test patch image for the maximum density control passes the position of transfer device 34 and separation device 35 which have retreated from the photoreceptor drum and its density is detected and amplified by means of density detecting sensor PC provided upstream of cleaning device 39. Following this, the density is successively sent to the CPU 71 as patch density data. Next, this test patch image is cleaned by cleaning device 39.

The CPU 71 detects the number of rotations (linear speed) of the development sleeve 33A in accordance with the density data within the pre-set density range among the above-mentioned patch density data, and the detected numbers of rotations are stored in the RAM. (see S62 in Fig. 6)

Hereinafter, when an image is formed, an instruction signal is sent to development driving section 33M to employ the above-mentioned number of rotations (linear speed) so that the number of rotations (linear speed) of development sleeve 33A is fixed.

Due to this, change of the maximum density of the copying image due to ambient conditions and deterioration of the photosensitive layer on photoreceptor drum 32 are compensated for. Ordinarily, the stipulated density is set at 1.40, since the quality of copying image is sufficient if the density is at least 1.35.

The above-mentioned maximum density can be corrected and controlled by modifying the toner density (mixing ratio) of developer or by modifying the conveyed amount of developer on development sleeve 33A. The method of modifying the number of rotations of development sleeve 33A is superior from the viewpoint of the fact that neither toner contamination nor fogging is caused.

After the 400 dpi maximum density of the copy image is corrected to the stipulated density as described above, gradation characteristics of 400 dpi are corrected.

### (2) Correction of gradation characteristics at 400 dpi (see S6 in Fig. 5 and S63 and S64 in Fig. 6):

A test pattern for gradation characteristics correction is also formed by means of a laser beam for which the scanning beam differences are corrected. After detecting the density thereof, gradation characteristics at 400 dpi are corrected by calculation.

In the same manner as above, in gradation characteristics correction, photoreceptor drum 32 is charged in the same manner as in the above-mentioned image formation under the control of the CPU 71 while there is no toner on photoreceptor drum 32. In addition, a test pattern signal for gradation characteristics correction is sent to the semiconductor laser of writing unit 20 from image signal processing section 60.

In the case of level 0 - 255 of 8 bit digital signal, in the above-mentioned test pattern, the PWM signals with every 8 levels are sent to the semiconductor laser of writing unit 20. On photoreceptor drum 32, plural latent images of test patch are written in the secondary scanning direction (see S63 in Fig. 6).

The above-mentioned latent image is developed on a reversal development basis by developing device 33 in which the number of rotations of development sleeve 33A is fixed, and results in plural test patch images for gradation characteristics correction in which densities are different from each other. The patch image passes the position of retreated transfer device 34 and separation device 35 and its density is detected by density detecting sensor PC.

A series of detected density data is converted to gradation characteristics correction data in accordance with gradation characteristics correction program in the CPU 71 (see S64 in Fig. 6).

The gradation characteristics correction data generated by means of the CPU 71 (density of the patch image) is interpolated to represent a continuous curve. This curve represents the printer characteristics. Incidentally, a linear interpolation method can sufficiently be utilized in place of the interpolation method.

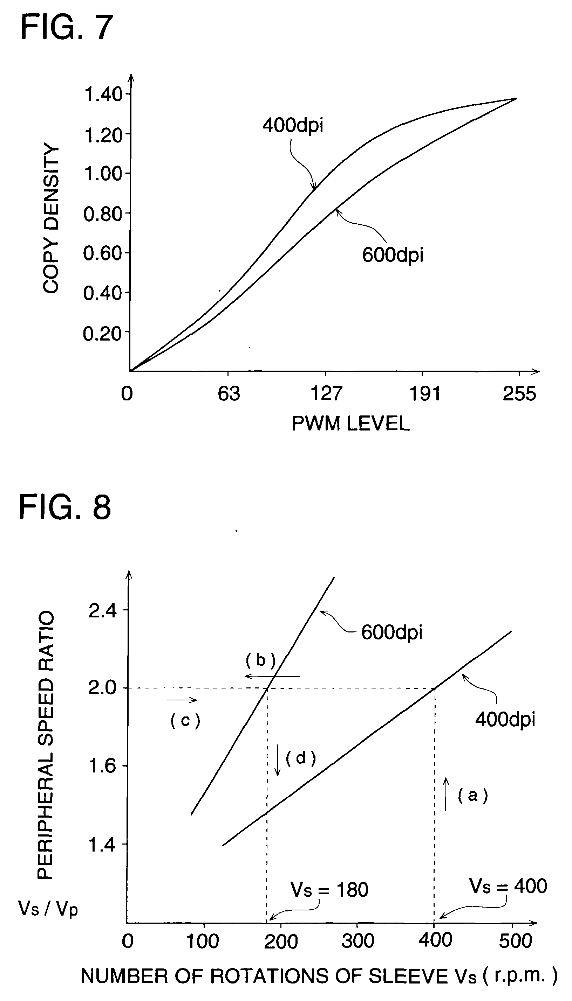

The CPU 71 produces a gradation characteristics correction curve from the reverse function of the continuous curve. The product of the continuous curve showing the above-mentioned printer characteristics and the curve of gradation characteristics correction results in a 45°. Fig. 7 shows the behavior of gradation characteristics correction data with regard to 400 dpi and 600 dpi described later. Incidentally, the maximum image density (copy density CD) has been determined to be 1.40, due to the above-mentioned maximum image density correction.

The above-mentioned gradation characteristics correction curve is stored in the RAM. When forming an image, an image signal is corrected in accordance with the gradation characteristics correction curve re-called from the RAM. Following this, the image signal is inputted into unit 20 to form a latent image. Therefore, correction is conducted for gradation characteristics change due to the change of printer characteristics caused by the deterioration of the photoreceptor of photoreceptor drum 32 while the apparatus is being used and changes of ambient conditions occur.

### [7] Maximum density correction and gradation characteristics correction at 600 dpi (S7 in Fig. 5).

After the maximum density correction and gradation characteristics correction at 400 dpi are conducted, those at 600 dpi are conducted.

At the 600 dpi, the maximum density is corrected by the calculation without using writing of the test patch. The gradation characteristics are corrected using writing of the test patch.

### (1) Maximum density correction at 600 dpi (S71 in Fig. 6)

The maximum density at 600 dpi is corrected only by the calculation, referring to the results of the above-mentioned 400 dpi without forming a test patch image or detecting the density thereof.

The present inventors researched exhaustively and discovered that the cause of malfunctions in terms of the maximum density correction, is the change of the maximum density correction due to differences of emission characteristics of the laser element itself, when laser power is reduced (from 400 dpi to 600 dpi).

The present inventors discovered that enhancement of high image quality can be achieved by providing adjustment of maximum density which changes based on the differences of emission characteristics as shown below.

Initially, the above-mentioned maximum density correction can obtain the best effects by conducting it at both 400 and 600 dpi. However, there is a problem that numerous correction are required for each individual image forming process.

Referring to and calculating the table produced from the results of the maximum density correction at 400 dpi, correction calculation can be conducted for also correcting the maximum density at 600 dpi.

Here, utilizing characteristics by which image density is changed due to change of the peripheral speed ratio VS/VP, the maximum image density can be corrected by modifying the peripheral speed ratio, after the correction calculation.

Namely, the CPU 71 detects the number of rotations (linear speed) of development sleeve 33A which is within a pre-set density range from patch density data with regard to 400 dpi, and stores it to the RAM, storing the number of rotations. When an image at 400 dpi is formed thereafter, a designation signal is sent to developing and driving section 33M to use the number of rotations (linear speed) so as to fix the number of rotations (linear speed) of development sleeve 33A.

Therefore, with regard also to 600 dpi, it is necessary to obtain the number of rotations of development sleeve 33A which can provide stipulated density. Here, however, the number of rotations of development sleeve 33 at 400 dpi is obtained by calculation.

First, peripheral speed ratio VS/VP of the number of rotations VS (400) of development sleeve 33A at 400 dpi, which has already been calculated, will be obtained. For example, in Fig. 8 which shows the relationship between the number of rotations of development sleeve VS and the number of rotations of process unit VP, at the maximum image density of 1.40, when VS (400) is 400 rpm, the peripheral speed ratio then is calculated from Fig. 8 to determine that the peripheral speed ratio is 2.0 ((a) and (b) in Fig. 8).

Next, number of rotations VS (600) of development sleeve 33A at 600 dpi when the peripheral speed ratio is 2.0 is calculated ((c) and (d) in Fig. 8). In the case shown in Fig. 8, the number of rotations VS (600) of the development sleeve 33A at 600 dpi is 180 rpm.

As described above, the CPU 71 calculates the number of rotations (linear speed) of development sleeve 33A which will be within the stipulated density range at 600 dpi by the calculation, and stores the number of rotations in the RAM. Thereinafter, CPU 71 sends a designation signal to development driving section 33M to use the number of rotations (linear speed) when forming an image at 600 dpi hereinafter, and fixes the number of rotations (linear speed) of development sleeve 33A.

Due to the above, change of the maximum density of copy image due to changes of environmental conditions and deterioration of photosensitive layer of photoreceptor drum 32, are corrected.

Due to the procedure described above, by correcting the maximum density at 600 dpi by calculation, when recording pixel density is changed (from 400 dpi to 600 dpi), it is possible to correct the change of the maximum density which occurs due to differences of emission characteristics of the laser element itself.

Therefore, regardless of the change of laser intensity, it is possible to form favorable images. By calculating the maximum density correction, the total processing time can be shortened compared to correcting by each image formation.

Here, the maximum density correction at 400 dpi is the first correction, and at 600 dpi is the second correction. Therefore, in the above-mentioned manner, correction of the maximum image density of the second and subsequent corrections will be conducted by calculation. Here, correction was accomplished by switching two kinds of recording pixel density. Even when switching of three or more kinds of recording pixel densities, correction of the maximum image density of the second or subsequent densities is conducted by calculation.

As described above, after the maximum density of the copy image at 600 dpi is corrected to the stipulated density, gradation characteristics at 600 dpi are corrected.

### (2) Correction of gradation characteristics at 600 dpi (see S72 and S73 in Fig. 6)

In the above-mentioned correction of gradation, a test pattern for gradation characteristics correction is also formed by means of a laser beam for which scanning beam differences are corrected. After the density thereof is detected, calculation is conducted.

In gradation characteristics correction, while there is no toner on photoreceptor drum 32, due to control by CPU 71, photoreceptor drum 32 is charged in the same manner as in the above-mentioned image formation. A test pattern signal for gradation characteristics is sent from image signal processing section 60 to the semi-conductor laser of writing unit 20.

In the case of levels 0 - 255 of the 8-bit digital signals, in the above-mentioned test pattern, the PWM signals with every 8 levels are sent to the semiconductor laser of writing unit 20. On photoreceptor drum 32, plural latent image test patches are written in the secondary scanning direction.

The above-mentioned latent image is developed on a reversal development basic by means of developing device 33 in which the number of rotations of development sleeve 33A is fixed, and results in plural test patch images for gradation characteristics correction in which densities are different from each other. The patch image passes through the position of retreated transfer device 34 and separation device 35 and its density is detected by density detecting sensor PC.

The series of detected density data is converted to gradation characteristics correction data in accordance with the gradation characteristics correction program in the CPU 71.

The gradation characteristics correction data generated by means of the CPU 71 (density of the patch image) is interpolated and represented as a continuous curve. This curve represents the printer characteristics. Incidentally, a linear interpolation method can be sufficiently utilized in place of the interpolation method.

The CPU 71 produces a gradation characteristics correction curve from the reverse function of the continuous curve. The product of the continuous curve showing the above-mentioned printer characteristics and the curve of gradation characteristics correction, results in a 45° line.

The above-mentioned gradation characteristics correction curve is stored in the RAM. When forming an image, an image signal is corrected in accordance with the gradation characteristics correction curve called from the RAM. Following this, the image signal is inputted into unit 20 to form a latent image. Therefore, correction is conducted for gradation characteristics changes due to changes of printer characteristics caused by the deterioration of the photoreceptor on the photoreceptor drum 32 while the apparatus is being used, and also due to changes of ambient conditions.

### [8] Confirmation of the completion of warming up (S8):

Heating circuit of heater 37D in fixing device 37 is activated by turn-on of the power supply. During the above-mentioned correction process, heating continues. Temperature sensor 37S, detects whether or not heating has reached a prescribed fixing temperature. When heating has reached the fixing temperature and warming up of the fixing device has been completed, it is preferable to move to the flow chart shown as (S9).

In the present Example, after completion of warm-up, the flow chart advances to (S9). The sequence may also be moved to (S9), immediately before completion of warming up. With regard to exactly when before completion of warm-up, a reference temperature which is slightly lower (for example, minus 5°C) than the fixing temperature is set. At a time when temperature sensor 37S detects the reference temperature, the flow chart may advance to (S9). Also when the flow chart moves to (S9) after completion of warming up, the flow chart of (S9) may be advanced any time between the time of completion of warming up and formation of an initial image.

### [9] Correction of secondary scanning beam difference (S9):

Beam difference will be corrected in the secondary scanning direction. Since this correction was already conducted in a flow chart in (S4), this is the second adjustment. Explanation for correction will be omitted since it will be the same processing step as (S4). Incidentally, in the flow chart for (S9), it is preferable to correct beam difference in the primary scanning direction together with the correction of the beam difference in the secondary scanning direction.

According to experimentation by the inventors, as correction processing during rising of voltage, beam difference in the secondary scanning direction is corrected twice as shown in the flow chart shown in Fig. 5. It is necessary to conduct correction before and after (S6). It was found that the second correction is necessary to be conducted under certain environmental conditions or under close to the environmental conditions of completion of warming up, in terms of forming an image with high image quality.

If the first beam difference correction in the secondary scanning direction is omitted in the flow chart for (S4), any result in terms of the maximum density correction and gradation characteristics correction conducted in the (S6) flow chart is deviated from the appropriate correction result. Therefore, a subsequent image lacked reproducibility.

In the (S6) flow chart, either the maximum density or gradation characteristics may be corrected. However, it is preferable to conduct both in terms of reproducing optimal images.

If the second beam difference correction in the secondary scanning direction is omitted, in images formed subsequently, difference of 10 - 30 µm in the secondary scanning direction were observed on the printed image. Namely, due to the flow chart of (S9) a difference of 10 - 30 µm in the secondary scanning direction which was caused due to changes of humidity and temperature after the first correction. For subsequent image formation, high quality images can be stably obtained.

The above-mentioned Example employed an image forming apparatus having an image reading unit. However, the present invention is not limited thereto. It goes without saying that the present invention is applicable to an electrophotographic type printer not having an image reading unit and an image forming apparatus having a writing system in which an image is written by means of plural laser beams such as an electrostatic recording system.

According to the present invention, even in an image forming apparatus having a writing system in which an image is written by means of plural laser beams, correction and preparation operations (gradation characteristics correction and maximum image density correction) including beam difference of the laser beams are conducted, utilizing so-called warm-up until the temperature rises to the required temperature of the fixing device. Therefore, an image forming apparatus and a control method of an image forming apparatus which can produce copy images of extremely high image quality and high resolution, are provided.

Incidentally, by conducting the above-mentioned gradation characteristics correction and the maximum image density correction at least either when the power supply is activated for the image forming apparatus and after a prescribed number of formed images, optimal effects are ensured.

As detailed above, according to the above-mentioned embodiment of the present Example, the following effects can be obtained.
(1) In an embodiment of the Example for the above-mentioned image forming apparatus, the maximum image density and gradation characteristics of toner image are corrected by a correction means in accordance with switching of plural recording pixel densities.
   Incidentally, the number of kinds of recording pixel densities was two (400 dpi and 600 dpi). In addition, it is possible to correct similarly when additional kinds of recording pixel densities are switched.
   Therefore, even when emission characteristics are different due to dispersion between several laser elements and the maximum image density and gradation characteristics are changed due to switching of the recording pixel density, correction of gradation characteristics and maximum image density suitable for switching recording pixel density, can be conducted.
(2) In the present Example in which the correction means of the image forming apparatus of the above-mentioned item (1) forms a toner image on the photoreceptor and correction for gradation characteristics is conducted, the correction means forms the toner image in accordance with switching of the plural recording pixel densities and corrects its gradation characteristics.
   Therefore, even when emission characteristics are different due to dispersion between laser elements and gradation characteristics are changed due to switching of the recording pixel density, correction of gradation characteristics suitable for switching recording pixel density can be conducted.
(3) In the Example of the present invention in which the correction means of the image forming apparatus described in the above-mentioned item (1), wherein correction of the maximum image density in accordance with the recording pixel density of the second and subsequent correction by means of the correction means, is continually conducted during the calculation, the correction means corrects for maximum image density by a calculation when the correction means is switched to the second and subsequent recording pixel densities in accordance with switching of the plural recording pixel densities.
   Therefore, even if laser elements have different emission properties due to the dispersion between elements and thereby gradation characteristics change by switching of recording pixel density, gradation characteristics suitable for the recording pixel density switching can be corrected.
   With regard to the first correction of the recording pixel density ordinarily used, optimal correction can be conducted by forming toner images to be corrected. In cases other than for the recording pixel density ordinarily used (the second correction), the entire processing time can be shortened by correcting the maximum image density by means of the calculation.
(4) In the Example of the present invention, in which, as an image forming condition which switch and control, the switching and controlling means of the image forming apparatus of the above-mentioned item (1) selects at least one of: the writing exposure intensity, writing or driving velocity in the primary scanning direction, photoreceptor driving velocity, conveyance velocity, developing device driving velocity, fixing device driving velocity, fixing device setting temperature, electrical charge current value or an electrical transfer electrical current value, a favorable image is formed in accordance with the switched recording pixel density by selecting at least one of the image formation conditions necessary for switching and controlling image formation conditions when switching recording pixel density.
(5) The embodiment of this Example of the above-mentioned image forming method is to expose an image on a photoreceptor, to form an electrostatic latent image, which forms a toner image by developing a formed electrostatic latent image and which transfers the toner image from the photoreceptor onto a recording paper for fixing wherein, when forming the image, image formation conditions of the toner image are switched in accordance with switching of the recording pixel image and the maximum image density and the gradation properties of the toner image are corrected in accordance with switching of the plural recording pixel densities.
   In this Example, the maximum image density and gradation characteristics of the toner image are corrected by a correction means in accordance with the switching of plural recording pixel densities. Therefore, even if emission characteristics are different due to dispersion between laser elements and the maximum image density and gradation characteristics change due to switching of recording pixel density, the gradation characteristics and the maximum image density optimal for the recording pixel density can be corrected.
(6) In the correction of the maximum image density and gradation characteristics in the image forming method described in item (5) above, in which the maximum image density is corrected in accordance with the second and subsequent recording pixel densities, when the maximum image density is switched to the second and subsequent recording pixel densities corrected in accordance with switching of the plural recording pixel densities, its maximum image density is corrected by means of the calculation.
   Therefore, even if laser elements posses different emission properties due to the dispersion between elements and thereby gradation characteristics change by switching recording pixel densities, gradation characteristics can be corrected for optimal recording pixel density switching.
   With regard to the first correction of the ordinarily used recording pixel density, accurate correction can be conducted by first forming a toner image to be corrected. In cases other than for the recording pixel density ordinarily used (the second correction), the entire processing time can be shortened by correcting for the optimal image density by means of the calculation.
(7) In correcting from a lower recording pixel density in the correction for the maximum image density and gradation property corresponding to plural steps of recording pixel density in the image forming method described in the above-mentioned item (5), correction is conducted from a low recording pixel density in accordance with switching of the plural recording pixel densities.
   Therefore, even if laser elements posses different emission properties due to the dispersion between elements and thereby gradation characteristics change by switching of recording pixel density, gradation characteristics can be corrected to be suitable for the recording pixel density switching.
   In addition, due to correcting from a lower recording pixel density, fine gradation difference can further be achieved. Therefore, in cases of high recording pixel density, correction by means of the calculation becomes possible.
(8) In the Example of the above-mentioned image forming apparatus, a switching and controlling means regulates image forming conditions by means of a correction value which corrected the maximum image density and gradation characteristics in accordance with the plural recording pixel densities.
   In this Example of a control method of the above image forming apparatus, image forming conditions are controlled by means of a value which corrected the maximum image density and gradation characteristics in accordance with the plural recording pixel densities.
   Due to the above, even if the maximum image density and gradation characteristics are corrected in accordance with the recording pixel density, image formation is kept at optimal conditions so that high quality images are formed.
(9) In the control method of the image forming apparatus of item (8) above, which controls image forming conditions using a correction value obtained through correction of gradation characteristics corresponding to plural recording pixel densities by forming a toner image on the photoreceptor in this invention for a control method of an image forming apparatus, image forming conditions are controlled by means of a correction value in which toner image in accordance with the plural recording pixel densities is formed and the gradation characteristics are enhanced.
   Due to the above, even if the gradation characteristics are corrected in accordance with the recording pixel density, image formation is kept at optimal conditions so that high quality images are formed.
(10) In the control means of this image forming apparatus of item (8) above, which corrects the maximum image density in accordance with the recording pixel density of the second and subsequent correction by means of this correction means of the calculation, in accordance with switching of the plural recording pixel densities, when correction is switched to the second and subsequent recording pixel density, maximum image density is corrected to optimal levels by means of this calculation and image forming conditions are controlled due to the correction value.
   Due to the above, even if image density is corrected to the maximum levels in accordance with the recording pixel density, image formation is kept at optimal conditions so that high quality images are formed.
   With regard to the first correction of the recording pixel density ordinarily used, accurate correction can be conducted by initially forming a toner image to be corrected. In cases other than for the recording pixel density ordinarily used (the second correction), the entire processing time can be shortened by correcting for maximum image density by means of this calculation.
(11) In a controlling method of an image forming apparatus, as an image forming condition which switches and controls in this invention through the control method of the image forming apparatus, which selects at least one of: writing exposure intensity, writing and driving velocity in the primary scanning direction, photoreceptor driving velocity, conveyance velocity, developing device driving velocity, fixing device driving velocity, fixing device setting temperature, charge electrical current value or a transfer electrical current value, by selecting at least one of image forming conditions necessary for controlling to switch image forming conditions when switching the recording pixel density, favorable images in accordance with the switched recording pixel densities can be formed.
(12) In the Example of the control method of the image forming apparatus described above, the correction for maximum image density and gradation property corresponding to plural steps of recording pixel density are conducted at least when the power supply for the image forming apparatus is activated or after a prescribed number of sheets of the image have passed.
   In the Example of the control method of this image forming apparatus, the correction for maximum image density and gradation property corresponding to plural recording pixel densities are conducted at least when the power supply for the image forming apparatus is activated or after a prescribed number of sheets of the image have passed. Therefore, optimal operation is ensured even when the recording pixel density is switched to plural steps.
   The above-mentioned Example exemplifies the image forming apparatus having the image reading unit, the image forming method and the control method in the image forming apparatus. However, the present invention is not limited thereto.
   Namely, it goes without saying that the present invention is applicable to an electronic photographic printer not having an image reading unit, an image forming apparatus having a writing system which writes an image by means of plural laser beams, an image forming method, and a control method of an image forming apparatus.

## Claims

1. An image forming apparatus comprising:
(a) a photoreceptor body;
(b) writing exposure means for forming a latent image on the photoreceptor body;
(c) developing means for developing the latent image to form a toner image;
(d) transfer means for transferring the toner image onto a recording sheet;
(e) fixing means for fixing the toner image on the recording sheet;
(f) switching means for switching a plurality of recording pixel densities; and
(g) correcting means for correcting a maximum image density of the toner image according to the switched recording pixel density.

2. The image forming apparatus of claim 1, wherein the exposure means is a laser for emitting a laser beam.

3. The image forming apparatus of claim 2, wherein a switching of the recording pixel density is interlocked with a switching of a power of the laser beam.

4. The image forming apparatus of claim 1, wherein the correcting means forms a test pattern for correcting the maximum image density, and corrects the maximum image density by detecting density of the test pattern with a density detecting sensor.

5. The image forming apparatus of claim 4, wherein the test pattern includes a plurality of toner images having image densities different from each other.

6. The image forming apparatus of claim 4,
wherein the correcting means produces data for correcting the maximum image density by detecting the density of the test pattern and stores the data in a memory.

7. The image forming apparatus of claim 6, wherein when the recording pixel density is switched, the correcting means corrects the maximum image density by calculating the data for correcting the maximum image density.

8. The image forming apparatus of claim 6, wherein the correcting means corrects the maximum image density by calculating the data for correcting the maximum image density with respect to a second recording pixel density and thereafter.

9. The image forming apparatus of claim 1, wherein correcting means corrects a gradation property of the toner Image according to the plurality recording pixel densities.

10. The image forming apparatus of claim 9, wherein when the recording pixel density is switched, the correcting means forms a test pattern for correcting the gradation property and corrects the gradation property by detecting density of the test pattern with a density detecting sensor.

11. The image forming apparatus of claim 10, wherein the test pattern includes a plurality of toner images having image densities different from each other.

12. The image forming apparatus of claim 10, wherein the correcting means produces data for correcting the gradation property by detecting the density of the test pattern and stores the data in a memory.

13. The image forming apparatus of claim 9, wherein after the correcting means corrects a gradation property of a lower recording pixel density from the plurality of recording pixel densities, the correcting means corrects a gradation property of a higher recording pixel density.

14. The image forming apparatus of claim 9, wherein after the correcting means corrects the maximum image density, the correcting means corrects the gradation property.

15. The image forming apparatus of claim 1 further comprising a switching control means for controlling image formation conditions according to a switched recording pixel density by the switching means for switching the recording pixel density.

16. The image forming apparatus of claim 15, wherein the image formation conditions include at least one of an exposure amount of the exposure means, a writing speed of the exposure means, a driving speed of the photoreceptor body, a driving speed of the developing means, a driving speed of the fixing means, and temperature of the fixing means.

17. The image forming apparatus of claim 1, wherein after the correcting means corrects the maximum image density of a lower recording pixel density from the plurality of recording pixel densities, the correcting means corrects the maximum image density of a higher recording pixel density.

18. The image forming apparatus of claim 1, wherein the correcting means corrects either when a power supply of the apparatus turns on or while a prescribed number of image formation is conducted.
